# EUROPÄISCHE PATENTANMELDUNG

(11) **EP 3 629 151 A1**
(43) Veröffentlichungstag der Anmeldung: **01.04.2020**
(21) Anmeldenummer: 19196334.7
(22) Anmeldetag: 10.09.2019
(51) Int. Cl.: G06F 8/71, G06F 8/34, G06F 8/35, G06F 8/38, G06F 3/048

(54) **VERFAHREN ZUM ÄNDERN VON MODELLEN FÜR DIE ERZEUGUNG VON QUELLCODE**

(30) Priorität: 28.09.2018 DE 102018124064
(71) Anmelder: dspace digital signal processing and control engineering GmbH, 33102 Paderborn (DE)
(72) Erfinder: Mair, Michael, 33102 Paderborn (DE)

(57) **Zusammenfassung**

Die Erfindung betrifft ein Verfahren zum Übertragen von Änderungen zwischen Blockdiagrammen, welche zyklisch berechnete Modelle aus mit Signalen verbundenen Blöcken umfassen, wobei ein Grundmodell einen oder mehrere Basisblöcke umfasst, wobei ein Basisblock einen oder mehrere Basisparameter aufweist, wobei ein Erweiterungsmodell einen oder mehrere Basisblöcke und mindestens einen Erweiterungsblock umfasst, wobei ein Erweiterungsblock mindestens einen zusätzlichen Erweiterungsparameter aufweist. Ein erstes Blockdiagramm umfasst ein Grundmodell in einer ersten Version, ein zweites Blockdiagramm umfasst ein aus dem Grundmodell der ersten Version hervorgegangenes Erweiterungsmodell, und ein drittes Blockdiagramm umfasst ein Grundmodell in einer zweiten Version, wobei die erste Version älter als die zweite Version ist. Erfindungsgemäß erfolgt ein Anwenden einer Vielzahl von Transformationsvorschriften auf das erste Blockdiagramm, um ein erstes Zwischenmodell zu erhalten, ein Vergleichen des zweiten Blockdiagramms mit dem ersten Zwischenmodell, ein Ermitteln mindestens einer Konfigurationsvorschrift aus dem Vergleich, ein Anwenden der Vielzahl von Transformationsvorschriften auf das dritte Blockdiagramm, um ein zweites Zwischenmodell zu erhalten, und ein Anwenden der mindestens einen Konfigurationsvorschrift auf das zweite Zwischenmodell, um ein viertes Blockdiagramm zu erhalten. Weiterhin betrifft die Erfindung ein Verfahren zum Konfigurieren eines Steuergeräts, ein Computerprogrammprodukt und ein Computersystem.

## Beschreibung

Die Erfindung betrifft das Ändern von ausführbaren Modellen, insbesondere Blockdiagrammen, und die Erzeugung von Quellcode für die Programmierung von Steuergeräten aus Blockdiagrammen.

Steuergeräte werden in einer Vielzahl von Anwendungen eingesetzt, um physikalische Größen eines Prozesses zu erfassen und/oder mittels angeschlossener Aktuatoren auf einen Prozess einzuwirken; beispielsweise kann es sich um eine Antiblockierregelung eines Bremsvorgangs handeln. Die das dynamische Verhalten des Prozesses bestimmenden Zeitkonstanten bedingen häufig Zykluszeiten von 1 ms oder kürzer, so dass eine Echtzeitfähigkeit des Steuergeräts erforderlich ist. Aus Kostengründen weisen Steuergeräte häufig Mikrocontroller mit geringem Speicher und beschränkter Rechenleistung auf, weshalb der Größe und Effizienz des ausführbaren Codes eine große Bedeutung zukommt.

Um den Entwurf von Steuergeräten zu beschleunigen, werden Kontrollstrategien vielfach anhand von Modellen in einer Rechenumgebung wie MATLAB/Simulink entwickelt. Somit können Prozess und/oder Regler bzw. allgemein das Verhalten des Steuergeräts zunächst simuliert und das Vorliegen von gewünschten Eigenschaften überprüft werden. Bei den Modellen kann es sich insbesondere um Blockdiagramme handeln, welche Blöcke umfassen, die Operationen wie Berechnungen ausführen, wobei ein Block beispielsweise aus mehreren Eingangssignalen ein Ausgangssignal berechnen kann. In der Regel werden Blockdiagramme zyklisch ausgeführt, wobei alle Blöcke dauerhaft im Speicher gehalten werden und jeder Block einmal pro Zeitschritt ausgeführt wird. Insbesondere kann ein Block auf Eingangssignale aus dem letzten Schritt eine oder mehrere Operationen anwenden, um Ausgangssignale des aktuellen Schritts zu erzeugen. Blockdiagramme können neben einem zyklisch ausgeführten Teilmodell zur Beschreibung näherungsweise zeitkontinuierlichen Verhaltens auch ein Teilmodell zur Beschreibung eines diskreten Verhaltens umfassen, in dem eine Anzahl von Zuständen und Übergangsbedingungen definiert sind.

Aus den Modellen kann mittels eines Codegenerators direkt Quellcode für die Programmierung des Steuergeräts erzeugt werden. Beispielsweise ist aus dem Dokument "Production Quality Code Generation from Simulink Block Diagrams", Proceedings of the 1999 International Symposium on Computer Aided Control System Design, Kohala Coast, Hawai'i, von H. Hanselmann et al. ein Codegenerator für die Erzeugung von Quellcode in Produktionsqualität bekannt. Hierbei kann der erzeugte Produktionscode durch eine zusätzliche Annotation der Blöcke bzw. Blockvariablen angepasst werden. Insbesondere kann ein ursprünglich für die Berechnung mit Fließkommavariablen hoher Genauigkeit erstelltes Modell mit Skalierungen versehen werden, wodurch das Steuergerät mit Festkommazahlen rechnen kann, um eine wesentliche Reduktion des Rechenaufwands bei geringen Einbußen in der Genauigkeit zu erzielen.

Auch im Bereich des Edge Computing, wo große anfallende Datenmengen effizient ausgewertet werden müssen, sind datenflussorientierte Programmiersprachen mittlerweile im Einsatz. So ist aus der US 2017/0277521 A1 ein Verfahren bekannt, bei dem in einer Entwicklungsumgebung eine Vielzahl von Datenströmen identifiziert werden, auf die eine Reihe von Funktionen angewendet werden sollen. Eingangsdatenströme liegen als Queues mit einer Vielzahl von Elementen vor, die beispielsweise von einer "Merge"-Funktion in einen gemeinsamen Ausgabedatenstrom zusammengefasst werden sollen. Ein entworfenes Programm wird in einem zweistufigen Übersetzungswerkzeug in optimierte plattformspezifische Anweisungen übersetzt. Hierbei werden die auf die einzelnen Datenströme angewendeten Transformationsfunktionen sowie die "Merge"-Funktion in deterministische endliche Automaten übersetzt und zusammengefasst. Durch diese Optimierung müssen keine Puffer für die Zwischenstufen der "Merge"-Funktion bereitgestellt werden, so dass ein effizientes Zusammenführen der Datenströme ermöglicht wird. Änderungen am Programm können in einer grafischen Benutzeroberfläche vorgenommen werden, die eine Visualisierungskomponente enthält. Hilfsmittel für das verteilte Entwickeln sind in dem Dokument nicht offenbart.

Bei größeren Entwicklungsprojekten werden unterschiedliche Bereiche der Entwicklung häufig von mehreren Personen durchgeführt, die auch in verschiedenen Unternehmen tätig sein können. Der Funktionsentwickler, welcher das Modell erstellt und verbessert, kann durchgängig mit Fließkommazahlen arbeiten. Ein einmal erstelltes Funktionsmodell kann auch für verschiedene Projekte eingesetzt und in der Funktionalität angepasst werden. Die für die Portierung auf das Steuergerät benötigte Zusatzannotation erfolgt in der Regel durch einen Spezialisten für Codegenerierung, an den das Modell in der entsprechenden Projektphase übergeben wird. Für diesen Schritt stehen häufig nur wenige Tage Zeit zur Verfügung, in welchen eine Vielzahl von manuellen Änderungen vorgenommen werden müssen. Wenn das Projekt mehrere Phasen umfasst, in denen jeweils eine Codegenerierung erfolgen soll, verschärft sich das Problem; auch wenn das zugrundeliegende Modell im Wesentlichen gleichgeblieben ist, bleibt die Zusatzannotation vielfach Handarbeit.

Für Texte, wie Quellcode in einer Hochsprache, welche in Zeilen mit jeweils einer Vielzahl von Worten geordnet sind, existieren Vergleichsprogramme, die vielfach auch einen Drei-Wege-Vergleich ermöglichen. Dieser ist insbesondere dann hilfreich, wenn mehrere voneinander abweichende Versionen eines Texts basierend auf einer Ausgangsversion erstellt wurden - beispielsweise von zwei parallel am Quellcode arbeitenden Programmieren. Die - bezogen auf Texte - komplexere Struktur von Blockdiagrammen bzw. allgemein grafischen Modellen erschwert den Vergleich zwischen Modellen. Um die Handhabbarkeit zu verbessern, schlägt die US 2018/0060457 A1 vor, das Ergebnis eines Vergleichs zwischen zwei Blockdiagrammen mittels Skripten zu filtern bzw. nachzubearbeiten. Besonders bei hierarchischen Blockdiagrammen, die eine Vielzahl von verschiedenen Hierarchieebenen umfassen, ist ein Übertragen von Änderungen nur sehr eingeschränkt möglich. Aus der US 8151244 B2 ist ein Verfahren zum "Mergen" bzw. Zusammenführen von grafischen Programmen bekannt, bei welchem ein gemeinsamer Vorfahr berücksichtigt wird. Hierbei ist es aber erforderlich, dass Modelle dieselbe Version der Entwicklungsumgebung verwenden und keine abweichende Zusatzannotation aufweisen, so dass eine automatisierte Übertragung von Änderungen an einem Funktionsmodell auf ein annotiertes Modell zur Codegenerierung nicht durchgeführt werden kann.

Vor diesem Hintergrund ist es eine Aufgabe der vorliegenden Erfindung, den Stand der Technik weiterzuentwickeln und insbesondere das Übertragen von Änderungen zwischen verschiedenen Modellarten zu unterstützen.

Diese Aufgabe wird durch ein Verfahren zum Übertragen von Änderungen zwischen Blockdiagrammen nach Anspruch 1 oder 12, ein Computerprogrammprodukt nach Anspruch 14 und ein Computersystem nach Anspruch 15 gelöst. Vorteilhafte Weiterbildungen sind Gegenstand der abhängigen Unteransprüche.

Es wird also ein Verfahren zum Übertragen von Änderungen zwischen Blockdiagrammen bereitgestellt. Die Blockdiagramme umfassen zyklisch berechnete Modelle aus mit Signalen verbundenen Blöcken, wobei ein Grundmodell einen oder mehrere Basisblöcke umfasst, wobei ein Basisblock einen oder mehrere Basisparameter aufweist, wobei ein Erweiterungsmodell einen oder mehrere Basisblöcke und mindestens einen Erweiterungsblock umfasst, wobei ein Erweiterungsblock mindestens einen zusätzlichen Erweiterungsparameter aufweist, insbesondere einen oder mehrere Parameter für die Codeerzeugung. Ein erstes Blockdiagramm umfasst ein Grundmodell in einer ersten Version, ein zweites Blockdiagramm umfasst ein aus dem Grundmodell der ersten Version hervorgegangenes Erweiterungsmodell, und ein drittes Blockdiagramm umfasst ein Grundmodell in einer zweiten Version, wobei die erste Version älter als die zweite Version ist. Erfindungsgemäß umfasst das Verfahren die Schritte
- Anwenden einer Vielzahl von Transformationsvorschriften auf das erste Blockdiagramm, um ein erstes Zwischenmodell zu erhalten, wobei eine Transformationsvorschrift eine Regel zur Identifizierung von Blöcken und eine auf erkannte Blöcke anzuwendende Änderung umfasst, wobei mindestens ein Erweiterungsblock eingefügt wird und/oder mindestens ein Basisblock gelöscht wird,
- Vergleichen des zweiten Blockdiagramms mit dem ersten Zwischenmodell,
- Ermitteln mindestens einer Konfigurationsvorschrift aus dem Vergleich, wobei eine Konfigurationsvorschrift eine Regel zur Identifizierung eines Blocks oder Parameters und eine anzuwendende Änderung an mindestens einem Parameter, insbesondere einem Erweiterungsparameters, umfasst,
- Anwenden der Vielzahl von Transformationsvorschriften auf das dritte Blockdiagramm, um ein zweites Zwischenmodell zu erhalten, und
- Anwenden der mindestens einen Konfigurationsvorschrift auf das zweite Zwischenmodell, um ein viertes Blockdiagramm zu erhalten. Das vierte Blockdiagramm umfasst zweckmäßigerweise ein Erweiterungsmodell in einer zweiten Version und ist insbesondere für die Codegenerierung vorbereitet.

Wenn zwei oder mehr Blöcke mit Signalen verbunden sind, wird dies im Modell zweckmäßigerweise mit einer Signallinie angezeigt, und es können Signale bzw. Daten zwischen den verbundenen Blöcke übertragen werden; hierbei gibt insbesondere ein erster Block einen Wert oder je nach Definition mehrere zusammengehörige Werte aus und ein zweiter Block empfängt diese und berücksichtigt sie bei der Ermittlung von einem oder mehreren zusammengehörigen Ausgabewerten des zweiten Blocks. Signale können skalare Variablen und/oder strukturierte Datentypen wie Arrays enthalten, wie dies beispielsweise bei einem Bus der Fall ist. Anders als Signale bleiben Parameter von Blöcken während einer Ausführung des Modells bzw. des generierten Codes fest; sie dienen insbesondere dazu, Eigenschaften des Blocks bzw. des generierten Codes festzulegen und werden daher in der Regel nur während der Modellierung geändert.

Die Erfindung basiert auf der Überlegung, dass für Modelle mit unterschiedlichen semantischen Schichten, wobei also mindestens ein Grundmodell und mindestens ein Erweiterungsmodell vorliegen, ein direkter Drei-Wege-Merge nicht sinnvoll ist. Stattdessen werden die Unterschiede zwischen Modellen mit unterschiedlichen semantischen Schichten, aber einer gleichen Version, getrennt betrachtet von Unterschieden zwischen Modellen verschiedener Versionen. Beim Übergang von einer semantischen Schicht zur anderen kann insbesondere ein Basisblock durch einen Erweiterungsblock ersetzt; ein Basisblock kann auch durch einen oder mehrere Blöcke ersetzt werden, von denen mindestens einer ein Erweiterungsblock ist. Hierbei ist die ausgeführte Funktionalität des Grundmodells und des Erweiterungsmodells häufig weitgehend gleich. Gewisse Unterschiede zwischen berechneten Signalwerten können beispielsweise durch die Verwendung von Festkommadatentypen im Erweiterungsmodell verursacht sein. Zwischen Modellen unterschiedlicher Versionen können signifikante funktionale Unterschiede auftreten, wenn der Nutzer beispielsweise eine Gruppe von Blöcken eingefügt hat.

Die Behandlung der einzelnen Blöcke und/oder abgegrenzter Blockgruppen wird zweckmäßigerweise als eine Transformationsvorschrift formuliert, die eine Regel zur Identifizierung von Blöcken und eine auf erkannte Blöcke anzuwendende Änderung umfasst, wobei mindestens ein Erweiterungsblock eingefügt wird und/oder mindestens ein Basisblock gelöscht wird. Gemäß einer weiteren Überlegung können Transformationsvorschriften in der Regel fest vorgegeben werden, da die Ersetzung eines Grundblocks unabhängig von seiner Lage immer mit dem gleichen Erweiterungsblock oder der gleichen Gruppe von Blöcken erfolgen kann. Beispielsweise kann eine Transformationsvorschrift besagen, dass ein Grund-Port, der ein Signal ausgibt, durch den entsprechenden Erweiterungs-Port ersetzt wird; dies gilt generell und kann daher einfach automatisiert werden. Zweckmäßigerweise wird für jeden Block eines Grundmodells überprüft, ob die Identifizierungsregel erfüllt ist, und falls ja wird jeweils die vorgegebene Änderung angewandt.

Die zusätzliche Attributierung bzw. der mindestens eine Erweiterungsparameter kann insbesondere Einstellungen für die Codeerzeugung umfassen, wie eine Skalierung, einen Wertebereich, eine Variablenklasse oder einen Datentyp. Beispielsweise eine Skalierung eines Erweiterungsblocks ist auch von der Skalierung und ggfs. den Operationen benachbarter Erweiterungsblöcke, also der lokalen Umgebung abhängig. Nach einer weiteren Überlegung können Konfigurationsvorschriften somit kontextabhängig sein, und werden daher zweckmäßigerweise aus einem Vergleich zweier Modelle mit gleicher Version ermittelt. Durch die Transformation des Grundmodells in der ersten bzw. alten Version in ein Zwischenmodell, welches hinsichtlich der semantischen Schicht dem Erweiterungsmodell entspricht, wird eine passende Vergleichsbasis geschaffen, um möglichst viele dieser kontextabhängigen Änderungen automatisiert übernehmen zu können. Der Nutzer muss weniger manuelle Anpassungen machen, um das Modell in der neuen Version für die Codegenerierung vorzubereiten.

Wenn Modelle viele verschiedene Versionen durchlaufen, können auch in der Vergangenheit ermittelte Konfigurationsvorschriften häufig weiterhin angewandt werden, so dass mit zunehmender Modellversion der manuelle Aufwand für die Erstellung des entsprechenden Erweiterungsmodells deutlich abnimmt. Durch das Speichern gelernter Vorschriften bzw. einen Lernmechanismus kann der Nutzer also noch deutlicher entlastet werden.

Prinzipiell kann es auch mehr als zwei semantische Ebenen geben, wenn beispielsweise eine zusätzliche Blockbibliothek immer Blöcke mit einem oder mehreren weiteren Parametern umfasst. Auch der Übergang von einer "einfachen" Annotierung eines Modells für die Codegenerierung zu einem umfassender annotierten Modell (z.B. für eine an AUTOSAR angepasste Codegenerierung) kann als ein Übergang zwischen semantischen Schichten angesehen bzw. behandelt werden. Dann kann eine schrittweise Anpassung erfolgen, wobei Transformationsvorschriften vorzugsweise immer den Übergang zwischen einer ersten semantischen Schicht und der nächsten semantischen Schicht umfassen, wobei die entsprechenden Erweiterungsblöcke einen oder mehrere Erweiterungsparameter aus einer vordefinierten Menge von Erweiterungsparametern dieser Schicht aufweisen.

Bevorzugt umfasst das Ermitteln einer Konfigurationsvorschrift das Anzeigen eines Unterschieds zwischen dem zweiten Blockdiagramm und dem ersten Zwischenmodell sowie das Empfangen einer Nutzereingabe, wobei der Nutzer die aus dem Unterschied abgeleitete Konfigurationsvorschrift editieren, freigeben oder verwerfen kann, und wobei eine editierte oder freigegebene Konfigurationsvorschrift gespeichert wird. Insbesondere kann der Unterschied in einer grafischen Benutzeroberfläche angezeigt werden, wobei der Nutzer die ermittelte Konfigurationsvorschrift freigibt, anpasst oder verwirft. Zweckmäßigerweise werden anhand des Vergleichs zweier Blockdiagramme also eine Vielzahl von einzelnen Konfigurationsvorschriften ermittelt, die jeweils einzelne Blöcke oder Gruppen aus einzelnen Blöcken betreffen.

Besonders bevorzugt sind Transformationsvorschriften und/oder Konfigurationsvorschriften in einer Datenbank hinterlegt, und dem Nutzer wird eine Bedienoberfläche bereitgestellt, in der eine Transformationsvorschrift und/oder eine Konfigurationsvorschrift definiert und/oder editiert werden kann, woraufhin die neue oder geänderte Vorschrift in der Datenbank gespeichert wird. Transformationsvorschriften können auf verschiedene Weise ausgestaltet werden, beispielsweise als Skript in einer Skriptumgebung, die einen Modell-Editor ansteuern kann. Es kann auch vorgesehen sein, Transformationsvorschriften eine Version zuzuordnen, und die Anwendung von Transformationsvorschriften auf Grund- oder Erweiterungsmodelle mit vorgegebenen Versionen und/oder einer vorgegebenen Erstellungszeit zu beschränken, beispielsweise um Änderungen innerhalb von semantischen Schichten zu berücksichtigen.

Besonders bevorzugt werden zwei oder mehr gespeicherte Konfigurationsvorschriften auf Gemeinsamkeiten verglichen, um eine verallgemeinerte Konfigurationsvorschrift zu erhalten, und eine verallgemeinerte Konfigurationsvorschrift wird in einer Bedienoberfläche angezeigt, welche ein Editieren, Freigeben oder Verwerfen der verallgemeinerten Konfigurationsvorschrift ermöglicht, wobei im Fall des Editierens oder Freigebens die verallgemeinerte Konfigurationsvorschrift gespeichert wird. Zweckmäßigerweise können Konfigurationsvorschriften Prioritäten zugeordnet werden, so dass z.B. zuerst eine verallgemeinerte Konfigurationsvorschrift angewendet wird und nur nicht abgedeckte Fälle mit speziellen Konfigurationsvorschriften behandelt werden. Die Zuordnung von Prioritäten kann durch den Nutzer oder automatisiert erfolgen, beispielsweise anhand eines Maßes für die Universalität der Konfigurationsvorschrift.

Vorzugsweise sind Blockdiagramme hierarchisch definiert, wobei ein Block in einer höheren Ebene mehrere Blöcke einer untergeordneten Ebene umfassen kann, wobei Blöcke einer untergeordneten Ebene einem Block einer höheren Ebene zugeordnet sind, und die Identifizierung von Blöcken erfolgt anhand eines Blocktyps, der eine Funktionalität angibt, und/oder anhand eines Modellpfads, der in hierarchischen Modellen den Ort des Blocks beschreibt, und/oder anhand eines Blocknamens. Wenn Blöcke Masken zur Vorgabe einer Darstellung umfassen, kann ein Blocktyp auch anhand eines Maskentyps (wie TL_CustomCode) ermittelt werden.

Bevorzugt wird nach dem Anwenden einer Konfigurationsvorschrift mindestens eine Plausibilitätsbedingung überprüft, wobei im Fall der Nichterfüllung eine Fehlermeldung ausgegeben und/oder eine grafische Benutzeroberfläche zum Ändern von Parametern, insbesondere Erweiterungsparametern, angezeigt wird. Zweckmäßigerweise wird das annotierte Erweiterungsmodell anhand einer vorgegebenen Regelmenge und eventuell vorhandenen Nutzerregeln auf Plausibilität überprüft. Im Fehlerfall kann der Nutzer in einer grafischen Bedienoberfläche die Parameter anpassen, so dass mit anderen Worten kritische Stellen automatisch angesprungen werden. Plausibilitätsbedingungen können vorgegeben sein oder vom Nutzer formuliert werden, wobei sowohl generelle, also immer zu überprüfende, als auch spezielle, also einer konkreten Konfigurationsvorschrift zugeordnete, Plausibilitätsbedingungen definiert bzw. überprüft werden können.

Für den Fall, dass Blockdiagramme hierarchisch definiert sind, wobei ein Block in einer höheren Ebene mehrere Blöcke einer untergeordneten Ebene umfassen kann, wobei Blöcke einer untergeordneten Ebene einem Block einer höheren Ebene zugeordnet sind, ist es vorteilhaft, wenn vor einem Vergleich zwischen zwei Blockdiagrammen ein Block des einen Blockdiagramms mit einem Block des anderen Blockdiagramm gleichgesetzt wird. Aus Sicht des Vergleichsprogramms handelt es sich also bei den beiden Blöcken um denselben Block. Das Gleichsetzen gibt eine relative Anordnung zwischen den beiden Modellen an und vermeidet eine Vielzahl irreführender Fehlermeldungen, wenn z.B. eine zusätzliche Hierarchieebene eingefügt wurde. Die Anordnung bzw. die gleichzusetzenden Blöcke kann der Nutzer in einer grafischen Bedienoberfläche angeben. Es kann auch vorgesehen sein, dass die Zuordnung in Form einer Vorschrift hinterlegt wird, wobei der Bezug vor dem Vergleich der Modelle angewendet wird. Weiterhin kann vorgesehen, dass für unterschiedliche Hierarchieebenen bzw. abgetrennte Bereiche wie Subsysteme jeweils ein eigener Bezugs zwischen zwei Blöcken angegeben wird, um für die jeweilige Ebene eine relative Lage festzulegen.

Bevorzugt wird für eine Vorschrift, die einen Block in das Blockdiagramm einfügt, wobei der eingefügte Block mit mindestens einem bisher vorhandenen Block durch ein Signal verbunden ist, gemäß einer zusätzlichen Vorschrift der Wert von mindestens einem Parameter des eingefügten Blocks anhand eines oder mehreren Parameterwerten von im Signalfluss benachbarten Blöcken, insbesondere dem direkten Vorgänger und/oder dem direkten Nachfolger, gewählt. Zweckmäßigerweise handelt es sich bei der Vorschrift um eine Transformationsvorschrift und bei der zusätzlichen Vorschrift um eine Konfigurationsvorschrift. Beispielsweise kann für einen neu eingefügten Block die Skalierung eines Signals anhand der Nachbar-Blöcke insbesondere im Signalfluss oberhalb angeordneten Blöcken ermittelt werden; auch allgemein Signaleigenschaften oder Label bzw. Beschriftungen können übernommen werden.

Vorzugsweise können vorab definierte Blöcke, welche eine Funktionalität bereitstellen, aus einer Bibliothek in das Blockdiagramm eingefügt werden, wobei definierte Blöcke mit der gleichen Funktionalität mehrfach in dem Blockdiagramm vorhanden sein können, und mindestens einem definierten Block sind eine oder mehrere Transformationsvorschriften zugeordnet. Zweckmäßigerweise werden die eine oder mehrere Transformationsvorschriften als Zusatzinformation in der Blockbibliothek gespeichert. Eine Transformationsvorschrift kann auch umfassen, dass in dem Fall, dass mehrere Instanzen eines Blocks in dem Blockdiagramm vorhanden sind, für die Instanzen eine gemeinsame Funktion und für jede Instanz eine Datenstruktur mit den Blockvariablen definiert werden, wobei je nach auszuführendem Block die entsprechende Datenstruktur an die Funktion übergeben wird.

Bevorzugt umfasst eine Vorschrift das automatische Einfügen eines Skalierungsblocks, wenn von drei im Signalfluss hintereinander angeordneten Blöcken des ursprünglichen Blockdiagramms der mittlere Block im geänderten Blockdiagramm fehlt bzw. gelöscht wurde, der mittlere Block eine andere Skalierung des Ausgangssignals als der im Signalfluss stromaufwärts gelegene Block aufweist, und der im Signalfluss stromabwärts gelegene Block die Skalierung gemäß einer Einstellung erben bzw. übernehmen soll.

Vorzugsweise umfasst das Verfahren zusätzlich das Erzeugen von Quellcode aus dem vierten Blockdiagramm.

Die Erfindung betrifft weiterhin ein Verfahren zum Übertragen von Änderungen zwischen Blockdiagrammen, welche zyklisch berechnete Modelle aus mit Signalen verbundenen Blöcken umfassen, wobei ein Grundmodell einen oder mehrere Basisblöcke umfasst, wobei ein Basisblock einen oder mehrere Basisparameter aufweist, wobei ein Erweiterungsmodell einen oder mehrere Basisblöcke und mindestens einen Erweiterungsblock umfasst, wobei ein Erweiterungsblock mindestens einen zusätzlichen Erweiterungsparameter aufweist, insbesondere einen oder mehrere Parameter für die Codeerzeugung, wobei ein erstes Blockdiagramm ein Erweiterungsmodell in einer ersten Version umfasst, wobei ein zweites Blockdiagramm ein Grundmodell in einer ersten Version umfasst, wobei ein drittes Blockdiagramm ein Erweiterungsmodell in einer zweiten Version umfasst, und wobei die erste Version niedriger, d.h. älter, als die zweite Version ist, umfassend die Schritte
- Anwenden mindestens einer invertierten Transformationsvorschriften auf das dritte Blockdiagramm, um ein erstes Zwischenmodell zu erhalten, wobei eine Transformationsvorschrift eine Regel zur Identifizierung von Blöcken und eine auf erkannte Blöcke anzuwendende Änderung umfasst, wobei gemäß einer Transformationsvorschrift mindestens ein Erweiterungsblock eingefügt wird und/oder mindestens ein Basisblock gelöscht wird, wobei eine invertierte Transformationsvorschrift die Änderung der zugeordneten Transformationsvorschrift rückgängig macht,
- Vergleichen des ersten Zwischenmodells mit dem zweiten Blockdiagramm, um geänderte Basisblöcke und/oder Basisparameter zu ermitteln,
- Übertragen der ermittelten Änderungen auf das erstes Blockdiagramm, um ein zweites Zwischenmodell zu erhalten, und
- Anwenden mindestens einer Transformationsvorschrift auf das zweite Zwischenmodell, um ein viertes Blockdiagramm zu erhalten.

In dieser Form ermöglicht das erfindungsgemäße Verfahren das Übertragen von Änderungen einer neuen Version eines Erweiterungsmodells auf eine alte Version eines Erweiterungsmodells, wobei es zwischen verschiedenen Versionen auch zu einer Änderung innerhalb der semantischen Schichten gekommen sein kann. Bei Seriensteuergeräten wird in der Regel die Version des Codegenerators bzw. der gesamten Toolkette festgehalten. Hier ermöglicht das erfindungsgemäße Verfahren beispielsweise das Anwenden eines später erstellten Patches auf eine alte Modellversion, die mit einer alten Toolkette bzw. einer alten Version des Codegenerators erstellt wurde. Dadurch, dass man den Weg über die Grundmodelle geht, wird das Umkopieren inkompatibler Sprachmittel der neuen Version vermieden. Zweckmäßigerweise wird zwischen Transformationsvorschriften verschiedener Versionen unterschieden, wobei in Abhängigkeit von der Version ein oder mehrere Sprachmittel in der Vorschrift angewandt oder vermieden werden.

Die Erfindung betrifft ferner ein Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Erstellen eines vierten Blockdiagramms mit einem erfindungsgemäßen Verfahren zum Übertragen von Änderungen,
b. Erzeugen von Quellcode aus dem vierten Blockdiagramm,
c. Kompilieren des Quellcodes für die Recheneinheit, so dass ein ausführbarer Code erzeugt wird,
d. Übertragen des ausführbaren Code auf das Steuergerät, und
e. Hinterlegen des ausführbaren Codes auf einem nichtflüchtigen Speicher des Steuergeräts und/oder Ausführen des ausführbaren Codes durch die Recheneinheit des Steuergeräts.

Ferner betrifft die Erfindung ein Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein erfindungsgemäßes Verfahren zum Übertragen von Änderungen auszuführen.

Weiterhin betrifft die Erfindung ein Computersystem umfassend eine Mensch-Maschine-Schnittstelle, einen nichtflüchtigen Speicher und einen Prozessor, wobei der Prozessor dazu eingerichtet ist, ein erfindungsgemäßes Verfahren zum Übertragen von Änderungen auszuführen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert und nicht maßstäblich.

Darin zeigt:
- Figur 1: eine bevorzugte Ausführungsform eines Computersystems,
- Figur 2: eine schematische Darstellung der vorzugsweise auf einem Computersystem vorhandenen Softwarekomponenten,
- Figur 3: ein allgemeines Schema des Erzeugens von Quellcode,
- Figur 4: eine schematische Darstellung des Vergleichs zwischen zwei Blockdiagrammen,
- Figur 5: eine schematische Darstellung verschiedener Ausführungen eines Modells,
- Figur 6: einen schematische Darstellung einer konvertierten Form eines Modells,
- Figur 7: eine schematische Darstellung von zwei hierarchischen Modellen, und
- Figur 8: eine schematische Darstellung einer beispielgemäßen Bedienoberfläche.

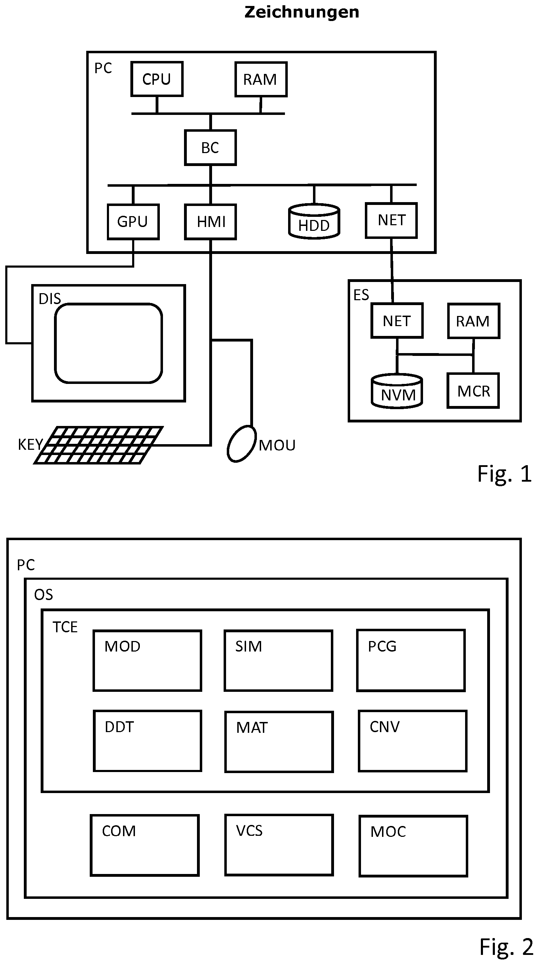

Figur 1 zeigt eine bevorzugte Ausführungsform eines Computersystems PC. Dieses weist einen Prozessor CPU, der insbesondere als Mehrkernprozessor realisiert sein kann, einen Arbeitsspeicher RAM und einen Buscontroller BC auf. Bevorzugt ist das Computersystem PC dazu ausgelegt, von einem Nutzer direkt manuell bedient zu werden, wobei vorzugsweise über eine Grafikkarte GPU ein Monitor DIS und über eine Peripherieschnittstelle HMI eine Tastatur KEY und eine Maus MOU angeschlossen sind. Prinzipiell könnte die Mensch-Maschine-Schnittstelle des Computersystems PC auch als Touch-Interface ausgebildet sein. Das Computersystem umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann als ein Seriensteuergerät oder als Evaluierungsboard für eine Target-Plattform ausgeführt sein. Zweckmäßigerweise umfasst es eine Schnittstelle NET zur Verbindung mit dem Computersystem PC, einen Mikrocontroller MCR mit einer von dem Prozessor des Computersystems abweichenden Architektur, einen Arbeitsspeicher RAM und einen nichtflüchtigen Speicher NVM. Für die Ausführung der Erfindung ist ein Steuergerät ES nicht erforderlich, dieses kann zweckmäßigerweise für Tests der Modelle eingesetzt werden.

Das Computersystem kann prinzipiell auch als ein Client-Server-System ausgestaltet sein, wobei eine oder mehrere Softwarekomponenten auf externen Servern ausgeführt werden.

In Figur 2 ist ein Schema der vorzugsweise auf dem Computersystem PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner aufzubauen.

Eine Technische Rechenumgebung TCE ermöglicht die Erstellung von Modellen und die Erzeugung von Quellcode aus den Modellen. In einer Modellierumgebung MOD können vorzugsweise über eine graphische Benutzerschnittstelle Modelle eines dynamischen Systems erstellt werden. Hierbei kann es sich insbesondere um Blockdiagramme handeln, welche mehrere Blöcke umfassen und das zeitliche Verhalten und/oder interne Zustände eines dynamischen Systems beschreiben. Zumindest einige der Blöcke sind über Signale verbunden, also gerichtete Verbindungen zum Austausch von Daten, welche skalar oder zusammengesetzt sein können. Blöcke können atomar sein, also in einem Schritt eine vordefinierte Funktionalität bereitstellen. Wenn Blockdiagramme hierarchisch sind, kann eine Vielzahl von Blöcken in einer untergeordneten Ebene den Aufbau eines Blocks in einer übergeordneten Ebene beschreiben. Zweckmäßigerweise können atomare Blöcke dann auch eine Vielzahl von Blöcken in einer untergeordneten Ebene umfassen. Zusammengesetzte Blöcke können insbesondere Subsysteme sein; Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke angeordnet sein, um die Eigenschaften des Subsystems weiter zu spezifizieren. Die Rechenumgebung TCE umfasst vorzugsweise eine oder mehrere Bibliotheken, aus der Blöcke bzw. Bausteine für den Aufbau eines Modells ausgewählt werden können. In einer Skriptumgebung MAT können Anweisungen interaktiv oder über eine Batchdatei eingegeben werden, um Berechnungen durchzuführen oder das Modell zu modifizieren. Die Rechenumgebung TCE umfasst weiterhin eine Simulationsumgebung SIM, die dazu eingerichtet ist, das Blockdiagramm zu interpretieren bzw. auszuführen, um das zeitliche Verhalten des Systems zu untersuchen. Diese Berechnungen erfolgen vorzugsweise mit Fließkommazahlen hoher Genauigkeit auf einem oder mehreren Kernen des Mikroprozessors CPU des Computersystems.

Aus einem erstellten Modell kann mit Hilfe eines Codegenerators PCG ein Quellcode bevorzugt in einer Programmiersprache wie C erzeugt werden. In einer Definitionsdatensammlung DDT werden zweckmäßigerweise zusätzliche Informationen zu dem Modell, insbesondere zu den Blockvariablen. Zweckmäßigerweise werden den Blockvariablen Wertebereiche und/oder Skalierungen zugeordnet, um eine Berechnung des Modells mit Festkomma-Instruktionen zu unterstützen. Auch gewünschte Eigenschaften des Quellcodes, beispielsweise Konformität zu einem Standard wie MISRA, können in der Definitionsdatensammlung DDT eingestellt bzw. hinterlegt werden. Zweckmäßigerweise wird jede Blockvariable einem vorgegebenen Variablentyp zugeordnet und es werden eine oder mehrere gewünschte Eigenschaften, wie beispielsweise die Zulässigkeit von Optimierungen wie einem Zusammenfassen von Variablen eingestellt. Der Codegenerator PCG wertet vorzugsweise die Einstellungen der Definitionsdatensammlung DDT aus und berücksichtigt diese bei der Erzeugung des Quellcodes. Die Definitionsdatensammlung DDT kann eine Baumstruktur aufweisen bzw. als eine einfache Datei in einem Speicher des Computersystems hinterlegt sein; alternativ kann es vorgesehen sein, die Definitionsdaten in einem dedizierten Datenbanksystem zu hinterlegen. Die Definitionsdatensammlung kann eine Programmschnittstelle und/oder Import-/Export-Funktionen aufweisen. Die technische Rechenumgebung TCE umfasst ferner einen Konverter CNV, der ein Modell mit den für die Codegenerierung relevanten Parametern in eine für den Vergleich geeignete Zwischenform konvertiert.

Das Computersystem PC weist einen Compiler COM und einen Linker auf, die zweckmäßigerweise für die Erzeugung von auf einem Steuergerät ES und/oder dem Computersystem PC ausführbaren Binärdateien eingerichtet sind. Prinzipiell kann eine Vielzahl von Compilern vorhanden sein, insbesondere Cross-Compiler für unterschiedliche Zielplattformen, um Steuergeräte bzw. Evaluationsboards ES mit unterschiedlichen Prozessorarchitekturen zu unterstützen. Weiterhin ist ein Vergleichsprogramm MOC vorhanden, welches zwei Modelle in der Zwischenform empfängt und Unterschiede ermittelt und vorzugsweise anzeigt. Zusätzlich kann aus einem oder mehreren ermittelten Unterschieden eine Konfigurationsvorschrift bestimmt bzw. abgeleitet werden. Bevorzugt umfasst das Vergleichsprogramm eine grafische Benutzeroberfläche, in der der Nutzer eine abgeleitete Konfigurationsvorschrift ansehen und anschließend editieren, bestätigen oder verwerfen kann. Weiterhin kann ein Versionskontrollsystem VCS vorhanden sein, welches verschiedene Versionen von Blockdiagrammen und/oder erzeugten Zwischenformen in einer Datenbank speichert.

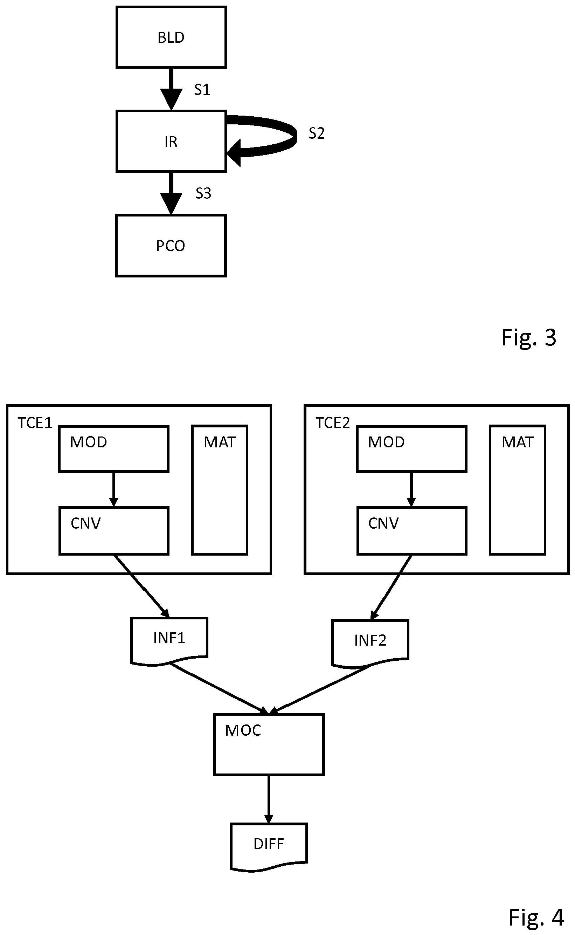

Figur 3 zeigt ein allgemeines Schema des Erzeugens von Quellcode mittels eines Codegenerators. Das Verfahren kann vollständig von einem Prozessor einer bevorzugten Ausführungsform des Computersystems PC ausgeführt werden; es kann aber auch zur Ausführung in einer Client-Server-Umgebung mit einem Bedienrechner und einem oder mehreren über ein Netzwerk verbundenen Servern vorgesehen sein, wobei insbesondere rechenintensive Schritte auf den Servern durchgeführt werden.

In einem ersten Schritt S1, einer Transformation, wird das gewählte Modell aus einem oder mehreren Blöcken des Blockdiagramms BLD in eine Zwischendarstellung IR transformiert, die vorzugsweise einen oder mehrere hierarchische Graphen umfasst. Hierbei kann es sich insbesondere um einen Datenflussgraph, einen Kontrollflussgraph oder eine Baumstruktur handeln.

Neben dem Blockdiagramm BLD werden zweckmäßigerweise auch Zusatzinformationen aus einer Definitionsdatensammlung DDT bei der Erzeugung der Zwischendarstellung berücksichtigt bzw. fließen in diese ein. Dies kann auch Situationen umfassen, in denen Elemente basierend auf Informationen in der Definitionsdatensammlung DDT erzeugt werden oder Eigenschaften von Elementen bzw. für die Codeerzeugung relevante Einstellungen, wie beispielsweise der Datentyp einer Variablen, aus der Definitionsdatensammlung DDT extrahiert werden.

In einem zweiten Schritt S2, einer Optimierung, werden die hierarchischen Graphen optimiert, um die Anzahl benötigter Variablen und/oder einen Speicherverbrauch, wie beispielsweise eine Stackbelegung, und/oder die Anzahl von Operationen bzw. Prozessorinstruktionen und/oder die Ausführungszeit des Quellcodes zu verringern. Diese Optimierung kann eine Vielzahl von Zwischenschritten umfassen, in denen weitere Zwischendarstellungen zwischen Modell/Blockdiagramm und Quellcode/Programmtext erzeugt werden. Insbesondere kann es vorgesehen sein, in jedem Zwischenschritt eine Menge von ursprünglichen hierarchischen Graphen in eine andere Menge von geänderten hierarchischen Graphen zu konvertieren, wobei eine oder mehrere Optimierungsregeln angewandt werden. Verschiedene Strategien wie "Constant folding" oder eine Eliminierung von "Dead Code" können während der Optimierung angewandt werden. Es kann auch vorgesehen sein, einzelne Optimierungen bereits im Rahmen der Transformation von Schritt S1 anzuwenden, insbesondere wenn diese auf einer Blockdiagrammdarstellung einfacher durchgeführt werden können.

In einem dritten Schritt S3, einer Übersetzung, werden die optimierte Zwischendarstellung IR bzw. die optimierten hierarchischen Graphen, welche aus den gesamten durchgeführten Zwischenschritten resultieren, in Quellcode PCO einer textuellen Programmiersprache, wie insbesondere C-Code, übersetzt. Auch in diesem Schritt kann eine weitere Optimierung erfolgen, insbesondere dergestalt, dass die erzeugten Anweisungen einer Untermenge der prinzipiell von der Sprache umfassten Anweisungen darstellen und/oder die erzeugten Kontrollstrukturen eine Untermenge der prinzipiell von der Sprache umfassten Kontrollstrukturen darstellen. Dies ermöglicht es, genau definierte Regeln zu erfüllen. Alternativ oder ergänzend kann es vorgesehen sein, Zusatzinformationen, wie z.B. einen Bezug zwischen Programmzeile und Block des Blockdiagramms BLD, zu erzeugen und insbesondere in Form von Kommentaren in den Quellcode einzubinden, um die Lesbarkeit des Quellcodes PCO zu verbessern und/oder ein Debugging zu vereinfachen.

Während oder nach der Codegenerierung können Informationen über das aktuelle Blockdiagramm oder Ergebnisse der Codegenerierung, wie beispielsweise Warnungen, in der Definitionsdatensammlung gespeichert werden. Diese Informationen können beispielsweise dazu genutzt werden, eine Kompilierung des erzeugten Quellcodes zu beeinflussen oder Metainformationen für andere Werkzeuge bereitzustellen, wie beispielsweise Kalibrierungsinformationen im ASAP2-Format oder Informationen zur Erzeugung einer Zwischenschicht nach dem AUTOSAR-Standard. In alternativen Ausführungsformen kann es vorgesehen sein, aus dem Blockdiagramm Code in einer Hardwarebeschreibungssprache oder eine Konfiguration eines programmierbaren Hardwarebausteins zu generieren.

Figur 4 stellt schematisch den Vergleich zwischen zwei Blockdiagrammen dar. Hierbei wird in einem ersten Schritt das erste betrachtete Blockdiagramm in einem Modelleditor MOD einer technischen Rechenumgebung TCE1 geöffnet und mit einem Konverter CNV in eine Zwischenform INF1 gebracht wird. Diese Zwischenform ist für den Vergleich besonders geeignet und umfasst aktuelle Parameterwerte, die in der Skriptumgebung MAT angepasst wurden. Die Skriptumgebung MAT kann für die automatisierte Ansteuerung von Modelleditor MOD und Konverter eingesetzt werden; ferner kann es vorgesehen sein, mittels Filterskripten das Vergleichsergebnis zu filtern, zu ändern, oder zu ergänzen. Anschließend oder parallel wird in einem zweiten Schritt das zweite betrachtete Blockdiagramm in einem Modelleditor MOD einer technischen Rechenumgebung TCE2 geöffnet und mit einem Konverter CNV in eine Zwischenform INF2 gebracht, wobei eine Skriptumgebung MAT ansteuern und/oder filtern kann. In einer sequentiellen Abarbeitung können TCE1 und TCE2 dieselbe technische Rechenumgebung bezeichnen, und die Zwischenformen INF1 und INF2 werden zumindest temporär in dem Dateisystem oder einer Datenbank gespeichert. Bei einer parallelen Ausführung werden zwei unabhängige Instanzen TCE1, TCE2 einer technischen Rechenumgebung geöffnet.

Die beiden Zwischenformen werden einem Vergleichsprogramm MOC zugeführt, welches eine Liste mit Unterschieden DIFF erzeugt. Zweckmäßigerweise umfasst das Vergleichsprogramm auch eine Komponente, die anhand eines Unterschieds zwischen dem ersten und dem zweiten Blockdiagramm eine Konfigurationsvorschrift ermittelt. Aus einem Vergleich zweier Blockdiagramme können somit - je nach Anzahl der Differenzen - eine Vielzahl von Konfigurationsvorschriften abgeleitet werden. Erhaltene Konfigurationsvorschriften können in einer Datenbank hinterlegt werden, wobei vorzugsweise eine Überprüfung stattfindet, ob eine entsprechende Konfigurationsvorschrift bereits vorhanden ist, so dass keine erneute Speicherung erfolgen sollte.

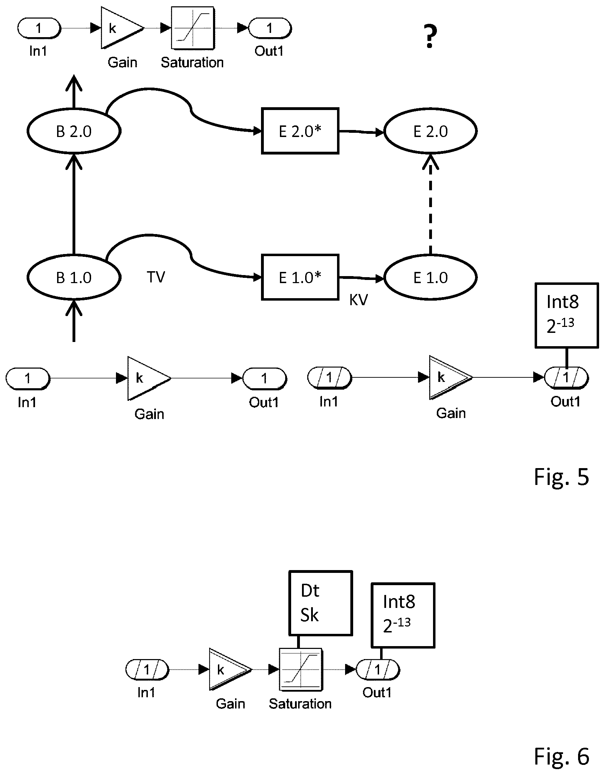

In Figur 5 ist schematisch eine Situation gezeigt, in der Änderungen am Grundmodell auf ein Erweiterungsmodell übertragen werden sollen. Insbesondere kann das Grundmodell ein Simulink-Modell und das Erweiterungsmodell ein TargetLink-Modell sein.

Dargestellt sind ein Grundmodell B 1.0 in einer älteren Version, ein Erweiterungsmodell E 1.0 und ein Grundmodell B 2.0 in einer neuen Version. Das Grundmodell B 1.0 umfasst einen Eingangsport In1, einen Verstärkungsblock Gain, der das Eingangssignal um einen Faktor k verstärkt (oder ggfs. abschwächt, bei k<1) und einen Ausgangsport Out1. In dem Erweiterungsmodell E 1.0 wurden Ein- und Ausgangsport durch einen entsprechenden Port mit zusätzlichen Parametern ersetzt (angedeutet durch zwei diagonale Striche im Port). Auch der Gain-Block wurde durch einen entsprechenden Erweiterungsblock ersetzt (angedeutet durch Doppelstriche). Für den Ausgangsport sind beispielhaft zwei Erweiterungsparameter angegeben, und zwar ein gewünschter Datentyp Int8 der Ausgangsvariablen sowie eine gewünschte Skalierung 2⁻¹³. Die neue Version des Grundmodells B 2.0 umfasst einen Sättigungsblock Saturation, der das Ausgangssignal des Verstärkerblocks auf ein vorgegebenes Intervall beschränkt. Für die Codeerzeugung ist ein Erweiterungsmodell E 2.0 in einer neuen Version erforderlich.

Die Unterschiede zwischen ursprünglichem Grundmodell B 1.0 und überarbeitetem Grundmodell B 2.0 können anhand eines Vergleichs der beiden Modelle mit dem Vergleichsprogramm MOC ermittelt werden. Um das Auftreten einer Vielzahl vermeintlicher Unterschiede zu unterbinden, ist es generell zweckmäßig, wenn die Modelle hierbei "aligned" werden, der Nutzer also definiert, das ein bestimmter Block im älteren Grundmodell B 1.0 einem bestimmten Block im neuen Grundmodell B 2.0 entspricht bzw. mit diesem gleichgesetzt wird. Dies gilt insbesondere für umfangreiche Modelle mit mehreren hierarchischen Ebenen und einer Vielzahl von Einzelblöcken.

Die Unterschiede zwischen Erweiterungsmodell E 1.0 und dem ursprünglichen Grundmodell B 1.0 können aufgeteilt werden in generelle Transformationen, wie beispielsweise die Ersetzung eines Ausgangsports in Grundform durch einen Ausgangsport in der erweiterten Darstellung, und in spezifische Konfigurationen, wie beispielsweise der Wahl einer bestimmten Skalierung an dem Ausgangsport. Man kann also Transformationsvorschriften TV und Konfigurationsvorschriften KV unterscheiden. Wendet man nur Transformationsvorschriften auf ein Grundmodell an, so entsteht ein Zwischenmodell E 1.0* bzw. E 2.0*, welche Erweiterungsblöcke enthält, aber mangels geeigneter Attributierung nicht für die Codeerzeugung geeignet ist. Geeignete Attribute bzw. Erweiterungsparameter sind häufig kontextabhängig und ändern sich daher mit der Platzierung des entsprechenden Blocks im Modell und/oder den benachbarten Blöcken oder deren Parametern. Im Gegensatz hierzu kann eine einmal definierte Transformation in der Regel unverändert auf alle Grundblöcke eines vorgegebenen Typs angewendet werden.

Figur 6 stellt schematisch eine konvertierte Form des neuen Modells der in Figur 5 skizzierten Situation dar. Der Eingangsport des neuen Grundmodells B 2.0 wurde mittels einer Transformationsvorschrift durch den entsprechenden Erweiterungs-Port mit Zusatzparametern ersetzt. Werte für die Zusatzparameter können durch eine Konfigurationsvorschrift angepasst werden, die aus dem Vergleich des (erweiterten) Eingangsports im transformierten Grundmodell B 1.0, also dem Zwischenmodell E 1.0*, mit dem erweiterten Eingangsport im Erweiterungsmodell E 1.0 bestimmt wird oder wurde. Der Verstärkungsblock wurde mit einer weiteren Transformationsvorschrift durch einen erweiterten Verstärkungsblock ersetzt. Werte für die Zusatzparameter können durch eine Konfigurationsvorschrift angepasst werden, die aus dem Vergleich des (erweiterten) Verstärkungsblocks im Zwischenmodell E 1.0* mit dem erweiterten Verstärkungsblock im Erweiterungsmodell E 1.0 bestimmt wird oder wurde. Analog kann auch der Ausgangsport durch eine generelle Transformationsvorschrift und eine positionsabhängige Konfigurationsvorschrift auf das neue Erweiterungsmodell E 2.0 übertragen werden. Beispielgemäß sind ein Wert Int8 für den Datentyp und ein Wert 2⁻¹³ für die Skalierung an dem Ausgangsport dargestellt.

Der Sättigungsblock im neuen Grundmodell B 2.0 wurde mittels einer Transformationsvorschrift durch einen erweiterten Sättigungsblock ersetzt (angerdeutet durch Doppelstriche oben und unten). Ein Wert Dt für den Datentyp und ein Wert Sk für die Skalierung kann nicht aus einem Vergleich des Erweiterungsmodells E 1.0 mit dem Zwischenmodell E 1.0* ermittelt werden, da im Grundmodell B 1.0 kein Sättigungsblock vorkommt. Eine direkt anwendbare ortsspezifische Konfigurationsvorschrift ist somit nicht verfügbar.

In der vorliegenden Situation, wobei der neue Block (Sättigungsblock) zwischen einem Vorgänger (Verstärkungsblock) und einem Nachfolger (Ausgangsport) eingefügt wird, ist es vorteilhaft, mögliche Werte für Erweiterungsparameter aus einer Betrachtung der benachbarten Blöcke zu gewinnen; man könnte von einer verallgemeinerten bzw. adaptiven Konfigurationsvorschrift sprechen. Beispielsweise können hier die Werte der Erweiterungsparameter des erweiterten Ausgangsports übernommen werden. In einem alternativen Vorgehen können die Werte von Vorgänger und Nachfolger verglichen werden, wobei im Fall einer Übereinstimmung die gemeinsamen Werte für den hinzugekommen Block übernommen werden können. Ob das eine oder das andere Vorgehen zweckmäßiger ist, kann für jeden einzelnen Erweiterungsparameter unterschiedlich sein. Bevorzugt umfasst das Vergleichsprogramm daher eine Bedienoberfläche, in welcher der Nutzer zwischen den verschiedenen Möglichkeiten auswählen kann. Das gewählte Vorgehen wird dann vorzugsweise als neue Konfigurationsvorschrift gespeichert.

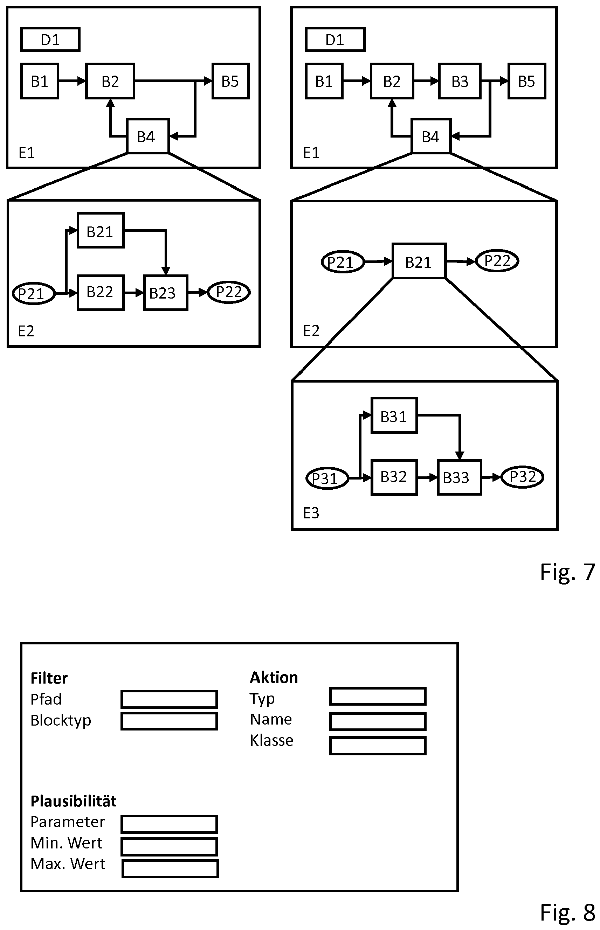

Figur 7 zeigt eine schematische Darstellung von zwei zu vergleichenden hierarchischen Modellen. Auf der linken Seite ist ein erstes Blockdiagramm dargestellt, welches eine erste Hierarchieebene E1 und eine zweite Hierarchieebene E2 aufweist. Auf der rechten Seite ist ein zweites Blockdiagramm mit drei Hierarchieebenen E1, E2 und E3 dargestellt.

In der Hierarchieebene E1 umfasst das erste Blockdiagramm einen Definitionsblock D1 und vier signalmäßig verbundene Blöcke B1, B2, B4, B5. Bei Block B4 handelt es sich um einen hierarchischen Block, dessen Funktionalität durch eine Vielzahl von Blöcken in der untergeordneten Hierarchieebene E2 definiert ist. Der Einfachheit halber wird angenommen, dass die Blöcke B1, B2, B5 einfache Blöcke ohne untergeordnete Hierarchieebenen sind; grundsätzlich könnten aber auch weitere hierarchische Blöcke vorhanden sein, die dann jeweils in getrennten untergeordneten Hierarchieebenen implementiert wären.

In der untergeordneten Hierarchieebene E2 umfasst das erste Blockdiagramm einen Eingangsport P21, einen Ausgangsport P22 und drei signalmäßig verbundene Blöcke B21, B2, B23, welche Rechenoperationen ausführen.

Das zweite Blockdiagramm umfasst in der ersten Hierarchieebene E1 einen Definitionsblock D1 und fünf signalmäßig verbundene Blöcke B1, B2, B3, B4, B5. Gegenüber dem ersten Blockdiagramm wurde ein zusätzlicher Block (B3) zwischen B2 und B5 eingefügt. Wie oben erläutert, können Werte für Erweiterungsparameter des transformierten Blocks aus einem Vergleich des Vorgängers mit dem Nachfolger ermittelt werden. Beispielsweise für eine Skalierung kann es aber auch dazu kommen, dass der neu hinzugefügte Block die bisherigen Werte des Nachfolgers ungültig macht. Wenn Block B3 insbesondere ein Verstärkungsblock mit einer großen Verstärkung ist, kann auch der bisherige Datentyp für das in B5 eingehende Signal überlaufen. Zweckmäßigerweise wird daher nach dem Einfügen von in dieser Hinsicht problematischen Blöcken eine "worst case"-Skalierung für nachfolgende Blöcke vorgeschlagen. Konkret könnte beispielsweise eine 8 bit breite Ganzzahl-Variable durch eine 16 bit breite Ganzzahl-Variable ersetzt werden. Vorzugsweise wird die vorgeschlagene Änderung dem Nutzer in einer grafischen Bedienoberfläche dargestellt, so dass er diese bestätigen, editieren oder verwerfen kann. Ergänzend kann auch vorgesehen sein, dass eine Liste mit solchen Vorschlägen oder kritischen Stellen in dem geänderten Modell dargestellt wird. Dadurch kann der Nutzer gezielt die entsprechenden Stellen anspringen lassen und jeweils die passende Vorgehensweise wählen.

Zur Vereinfachung wird vorliegend angenommen, dass nur Block B4 in der ersten Hierarchieebene des zweiten Blockdiagramms ein hierarchischer Block ist. Die zweite Hierarchieebene umfasst einen Eingangsport P21, einen Block B21 und einen Ausgangsport P22. Block B21 ist ein hierarchischer Block, dessen Implementierung durch weitere Blöcke in der untergeordneten dritten Hierarchieebene E3 modelliert ist. Die dritte Hierarchieebene E3 umfasst einen Eingangsport P31, drei Blöcke B31, B32, B33 und einen Ausgangsport P32. In einem direkten Vergleich des ersten Blockdiagramms mit dem zweiten Blockdiagramm würden sämtliche Blöcke unterhalb der jeweils ersten Hierarchieebene als Unterschiede dargestellt. Dies kann sinnvoll sein; beispielsweise wenn der linke Block B4 durch einen semantisch komplett abweichenden Block ersetzt worden wäre. Es kann aber auch irreführend sein, wenn beispielsweise Ebene E2 des ersten Blockdiagramms mit Ebene E3 des zweiten Blockdiagramms übereinstimmt, wobei eine zusätzliche Hierarchieebene als Raum für spätere Erweiterungen eingefügt wurde (wie eine Vorfilterung der Eingangssignale. Ein direkter Vergleich würde eine Vielzahl irreführender Unterschiede ergeben. In diesem Fall ist es zweckmäßig, Block B4 links mit Block B21 rechts gleichzusetzen, weil dann die untergeordnete strukturell übereinstimmende Modellierung auf abweichende Parameter überprüft werden kann. Diese Entscheidung trifft sinnvollerweise der Nutzer, und sie kann beispielsweise als eine gesonderte, vor dem Vergleich durchzuführende Vorschrift hinterlegt werden.

Figur 8 stellt schematische eine beispielgemäße Bedienoberfläche dar, die ein Editieren von Transformations- und/oder Konfigurationsvorschriften ermöglicht. Grundsätzlich umfasst eine Vorschrift einen Filter, also eine zu überprüfende Bedingung bzw. ein auf Übereinstimmung zu prüfendes Muster, und eine Aktion, also eine bei erfüllter Bedingung bzw. übereinstimmendem Muster anzuwendende Änderung.

Eine aus einem Vergleich zwischen einem Erweiterungsmodell und dem zugeordneten Zwischenmodell ermittelte Konfigurationsvorschrift ist in der Regel zunächst speziell bzw. ortsabhängig. Der Ort kann bei hierarchischen Modellen beispielsweise in Form eines Blockpfads angegeben werden, welcher übergeordnete Subsysteme bzw. Hierarchieebenen umfasst. Nachdem eine Vielzahl von Konfigurationsvorschriften ermittelt und in einer Datenbank hinterlegt wurden, wird zweckmäßigerweise überprüft, ob mehrere individuelle Konfigurationsvorschriften verallgemeinert werden können. Zusätzlich kann der Nutzer eine Priorität vorgeben, wobei auch eine grundsätzliche Bevorzugung allgemeiner Konfigurationsvorschriften vorgesehen werden kann. Optional kann es auch vorgesehen sein, dass nach dem Identifizieren und Hinterlegen einer verallgemeinerten Konfigurationsvorschrift, eine, mehrere oder alle der davon abgedeckten individuellen Konfigurationsvorschriften aus der Datenbank gelöscht oder als inaktiv markiert werden. Eine allgemeine Konfigurationsvorschrift kann - ähnlich wie eine Transformationsvorschrift - eine Filterung anhand des Blocktyps enthalten; es kann aber auch vorgesehen sein, das das Vorliegen einer bestimmten Umgebung, also definierte Blöcke als Vorgänger und oder Nachfolger, als Filterkriterium herangezogen wird.

In der gezeigten Benutzeroberfläche ist links ein Abschnitt "Filter" dargestellt, in dem der Nutzer einen Filter eingeben kann. Hierfür sind ein Feld "Pfad" und eine zugeordnete Eingabefläche sowie ein Feld "Blocktyp" mit zugeordneter Eingabefläche vorgesehen. Prinzipiell können auch weitere Felder bzw.

Eigenschaften für die Filterung herangezogen werden. Im gezeigten Beispiel kann der Nutzer also die Filterung nur auf einen konkreten Pfad oder nur auf einen konkreten Blocktyp vorgeben. Weiterhin ist es auch denkbar, dass der Nutzer ein kombiniertes Kriterium wie "der Pfad umfasst ein bestimmtes Subsystem" und "der Blocktyp hat einen bestimmten Wert" formuliert.

Rechts ist in der gezeigten Benutzeroberfläche ein Abschnitt "Aktion" dargestellt, in dem der Nutzer eine bei erfüllter Bedingung bzw. an allen Stellen, die die Bedingung erfüllen, durchzuführende Aktion bzw. anzuwendende Änderung angibt. Hierfür sind ein Feld "Typ", ein Feld "Name" und ein Feld "Klasse" jeweils mit zugeordneter Eingabefläche vorgesehen. Dementsprechend kann die anzuwendende Änderung ein Setzen des Blocktyps auf den unter "Typ" angegebenen Wert und/oder ein Setzen des Blocknamens auf den unter "Name" angegebenen Wert und/oder ein Setzen der Variablenklasse auf den unter "Klasse" angegebenen Wert umfassen. Grundsätzlich können auch andere, nicht angegebenen Änderungen angewendet bzw. Aktionen durchgeführt werden.

Unten ist in der gezeigten Benutzeroberfläche ein Abschnitt "Plausibilität" dargestellt, in welchem der Nutzer eine nach angewandter Änderung zu überprüfende Bedingung vorgegeben kann. Hierfür sind ein Feld "Parameter", ein Feld "Min. Wert" und ein Feld "Max. Wert" jeweils mit zugeordneter Eingabefläche vorgesehen. Zusätzlich (nicht gezeigt) ist es auch möglich, dass der Nutzer vorgegeben kann, ob bei nicht erfüllter Plausibilitätsbedingung eine allgemeine Warnung oder die entsprechende Stelle im Modell angezeigt werden soll bzw. ob die angewandte Änderung bei mangelnder Plausibilität rückgängig gemacht werden soll.

Das erfindungsgemäße Verfahren bzw. ein entsprechendes System ermöglicht es dem Nutzer, sukzessive eine Sammlung von Konfigurationsvorschriften bzw. Transformationsvorschriften aufzubauen. Insbesondere wenn aus mehreren aufeinanderfolgenden Versionen eines Grundmodells jeweils Code erzeugt werden soll, nimmt der Anpassungsaufwand mit zunehmender Version spürbar ab.

## Patentansprüche

1. Verfahren zum Übertragen von Änderungen zwischen Blockdiagrammen, welche zyklisch berechnete Modelle aus mit Signalen verbundenen Blöcken umfassen, wobei ein Grundmodell einen oder mehrere Basisblöcke umfasst, wobei ein Basisblock einen oder mehrere Basisparameter aufweist, wobei ein Erweiterungsmodell einen oder mehrere Basisblöcke und mindestens einen Erweiterungsblock umfasst, wobei ein Erweiterungsblock mindestens einen zusätzlichen Erweiterungsparameter aufweist, insbesondere einen oder mehrere Parameter für die Codeerzeugung, wobei ein erstes Blockdiagramm ein Grundmodell in einer ersten Version umfasst, wobei ein zweites Blockdiagramm ein aus dem Grundmodell der ersten Version hervorgegangenes Erweiterungsmodell umfasst, wobei ein drittes Blockdiagramm ein Grundmodell in einer zweiten Version umfasst, und wobei die erste Version älter als die zweite Version ist, umfassend die Schritte
• Anwenden einer Vielzahl von Transformationsvorschriften auf das erste Blockdiagramm, um ein erstes Zwischenmodell zu erhalten, wobei eine Transformationsvorschrift eine Regel zur Identifizierung von Blöcken und eine auf erkannte Blöcke anzuwendende Änderung umfasst, wobei mindestens ein Erweiterungsblock eingefügt wird und/oder mindestens ein Basisblock gelöscht wird,
• Vergleichen des zweiten Blockdiagramms mit dem ersten Zwischenmodell,
• Ermitteln mindestens einer Konfigurationsvorschrift aus dem Vergleich, wobei eine Konfigurationsvorschrift eine Regel zur Identifizierung eines Blocks oder Parameters und eine anzuwendende Änderung an mindestens einem Parameter, insbesondere einem Erweiterungsparameters, umfasst,
• Anwenden der Vielzahl von Transformationsvorschriften auf das dritte Blockdiagramm, um ein zweites Zwischenmodell zu erhalten, und
• Anwenden der mindestens einen Konfigurationsvorschrift auf das zweite Zwischenmodell, um ein viertes Blockdiagramm zu erhalten.

2. Verfahren nach Anspruch 1, **dadurch gekennzeichnet, dass** das Ermitteln einer Konfigurationsvorschrift das Anzeigen eines Unterschieds zwischen dem zweiten Blockdiagramm und dem ersten Zwischenmodell sowie das Empfangen einer Nutzereingabe umfasst, wobei der Nutzer die aus dem Unterschied abgeleitete Konfigurationsvorschrift editieren, freigeben oder verwerfen kann, und wobei eine editierte oder freigegebene Konfigurationsvorschrift gespeichert wird.

3. Verfahren nach Anspruch 1 oder 2, **dadurch gekennzeichnet, dass** Transformationsvorschriften und/oder Konfigurationsvorschriften in einer Datenbank hinterlegt sind, und dass dem Nutzer eine Bedienoberfläche bereitgestellt wird, in der eine Transformationsvorschrift und/oder eine Konfigurationsvorschrift definiert und/oder editiert werden kann, woraufhin die neue oder geänderte Vorschrift in der Datenbank gespeichert wird.

4. Verfahren nach Anspruch 2 oder 3, **dadurch gekennzeichnet, dass** zwei oder mehr gespeicherte Konfigurationsvorschriften auf Gemeinsamkeiten verglichen werden, um eine verallgemeinerte Konfigurationsvorschrift zu erhalten, und dass eine verallgemeinerte Konfigurationsvorschrift in einer Bedienoberfläche angezeigt wird, welche ein Editieren, Freigeben oder Verwerfen der verallgemeinerten Konfigurationsvorschrift ermöglicht, wobei im Fall des Editierens oder Freigebens die verallgemeinerte Konfigurationsvorschrift gespeichert wird.

5. Verfahren nach einem der vorhergehenden Ansprüche, **dadurch gekennzeichnet, dass** Blockdiagramme hierarchisch definiert sind, wobei ein Block in einer höheren Ebene mehrere Blöcke einer untergeordneten Ebene umfassen kann, wobei Blöcke einer untergeordneten Ebene einem Block einer höheren Ebene zugeordnet sind, und dass die Identifizierung von Blöcken anhand eines Blocktyps, der eine Funktionalität angibt, und/oder anhand eines Modellpfads, der in hierarchischen Modellen den Ort des Blocks beschreibt, und/oder anhand eines Blocknamens erfolgt.

6. Verfahren nach einem der vorhergehenden Ansprüche, **dadurch gekennzeichnet, dass** nach dem Anwenden einer Konfigurationsvorschrift mindestens eine Plausibilitätsbedingung überprüft wird, wobei im Fall der Nichterfüllung eine Fehlermeldung ausgegeben und/oder eine grafische Benutzeroberfläche zum Ändern von Parametern, insbesondere Erweiterungsparametern, angezeigt wird.

7. Verfahren nach einem der vorhergehenden Ansprüche, **dadurch gekennzeichnet, dass** Blockdiagramme hierarchisch definiert sind, wobei ein Block in einer höheren Ebene mehrere Blöcke einer untergeordneten Ebene umfassen kann, wobei Blöcke einer untergeordneten Ebene einem Block einer höheren Ebene zugeordnet sind, und dass vor einem Vergleich zwischen zwei Blockdiagrammen ein Block des einen Blockdiagramms mit einem Block des anderen Blockdiagramm gleichgesetzt wird.

8. Verfahren nach einem der vorhergehenden Ansprüche, **dadurch gekennzeichnet, dass** für eine Vorschrift, die einen Block in das Blockdiagramm einfügt, wobei der eingefügte Block mit mindestens einem bisher vorhandenen Block durch ein Signal verbunden ist, gemäß einer zusätzlichen Vorschrift der Wert von mindestens einem Parameter des eingefügten Blocks anhand eines oder mehreren Parameterwerten von im Signalfluss benachbarten Blöcken, insbesondere dem direkten Vorgänger und/oder dem direkten Nachfolger, gewählt wird.

9. Verfahren nach einem der vorhergehenden Ansprüche, **dadurch gekennzeichnet, dass** vorab definierte Blöcke, welche eine Funktionalität bereitstellen, aus einer Bibliothek in das Blockdiagramm eingefügt werden können, wobei definierte Blöcke mit der gleichen Funktionalität mehrfach in dem Blockdiagramm vorhanden sein können, und dass mindestens einem vordefinierten Block eine oder mehrere Transformationsvorschriften zugeordnet sind.

10. Verfahren nach einem der vorhergehenden Ansprüche, **dadurch gekennzeichnet, dass** eine Vorschrift das automatische Einfügen eines Skalierungsblocks umfasst, wenn von drei im Signalfluss hintereinander angeordneten Blöcken des ursprünglichen Blockdiagramms der mittlere Block im geänderten Blockdiagramm fehlt bzw. gelöscht wurde, der mittlere Block eine andere Skalierung des Ausgangssignals als der im Signalfluss stromaufwärts gelegene Block aufweist, und der im Signalfluss stromabwärts gelegene Block die Skalierung gemäß einer Einstellung erben bzw. übernehmen soll.

11. Verfahren nach einem der vorhergehenden Ansprüche, **gekennzeichnet durch** das Erzeugen von Quellcode aus dem vierten Blockdiagramm.

12. Verfahren zum Übertragen von Änderungen zwischen Blockdiagrammen, welche zyklisch berechnete Modelle aus mit Signale verbundenen Blöcken umfassen, wobei ein Grundmodell einen oder mehrere Basisblöcke umfasst, wobei ein Basisblock einen oder mehrere Basisparameter aufweist, wobei ein Erweiterungsmodell einen oder mehrere Basisblöcke und mindestens einen Erweiterungsblock umfasst, wobei ein Erweiterungsblock mindestens einen zusätzlichen Erweiterungsparameter aufweist, insbesondere einen oder mehrere Parameter für die Codeerzeugung, wobei ein erstes Blockdiagramm ein Erweiterungsmodell in einer ersten Version umfasst, wobei ein zweites Blockdiagramm ein Grundmodell in einer ersten Version umfasst, wobei ein drittes Blockdiagramm ein Erweiterungsmodell in einer zweiten Version umfasst, und wobei die erste Version älter als die zweite Version ist, umfassend die Schritte
• Anwenden mindestens einer invertierten Transformationsvorschriften auf das dritte Blockdiagramm, um ein erstes Zwischenmodell zu erhalten, wobei eine Transformationsvorschrift eine Regel zur Identifizierung von Blöcken und eine auf erkannte Blöcke anzuwendende Änderung umfasst, wobei gemäß einer Transformationsvorschrift mindestens ein Erweiterungsblock eingefügt wird und/oder mindestens ein Basisblock gelöscht wird, wobei eine invertierte Transformationsvorschrift die Änderung der zugeordneten Transformationsvorschrift rückgängig macht,
• Vergleichen des ersten Zwischenmodells mit dem zweiten Blockdiagramm, um geänderte Basisblöcke und/oder Basisparameter zu ermitteln,
• Übertragen der ermittelten Änderungen auf das erstes Blockdiagramm, um ein zweites Zwischenmodell zu erhalten, und
• Anwenden mindestens einer Transformationsvorschrift auf das zweite Zwischenmodell, um ein viertes Blockdiagramm zu erhalten.

13. Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Erstellen eines vierten Blockdiagramms mit einem Verfahren nach einem der vorhergehenden Ansprüche,
b. Erzeugen von Quellcode aus dem vierten Blockdiagramm,
c. Kompilieren des Quellcodes für die Recheneinheit, so dass ein ausführbarer Code erzeugt wird,
d. Übertragen des ausführbaren Code auf das Steuergerät, und
e. Hinterlegen des ausführbaren Codes auf einem nichtflüchtigen Speicher des Steuergeräts und/oder Ausführen des ausführbaren Codes durch die Recheneinheit des Steuergeräts.

14. Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein Verfahren gemäß einem der vorhergehenden Ansprüche auszuführen.

15. Computersystem umfassend eine Mensch-Maschine-Schnittstelle, einen nichtflüchtigen Speicher und einen Prozessor, wobei der Prozessor dazu eingerichtet ist, ein Verfahren nach einem der Ansprüche 1 bis 13 auszuführen.
